# FASCICULE DE BREVET EUROPEEN

(11) **EP 3 980 218 B1**
(45) Date de publication et mention de la délivrance du brevet: **05.03.2025**
(21) Numéro de dépôt: 20742801.2
(22) Date de dépôt: 07.06.2020
(51) Int. Cl.: B24C 1/00, B24C 1/08, B24C 11/00, C01B 32/55, C01B 32/50, B33Y 40/20

(54) **MÉDIA DE SABLAGE ET PROCÉDÉ DE TRAITEMENT DE SURFACE UTILISANT UN TEL MÉDIA DE SABLAGE**
SANDSTRAHLMEDIEN UND VERFAHREN ZUR OBERFLÄCHENBEHANDLUNG MIT SOLCHEN SANDSTRAHLMEDIEN
SAND BLASTING MEDIA AND METHOD OF SURFACE TREATMENT USING SUCH SAND BLASTING MEDIA

(30) Priorité: 07.06.2019 FR 1906076
(43) Date de publication de la demande: 13.04.2022
(73) Titulaire: SAFRAN AIRCRAFT ENGINES, 75015 Paris (FR)
(72) Inventeur: SISTACH, Hugo, 77550 Moissy-Cramayel (FR); COLAS, Cédric, Pierre, Jacques, 77550 Moissy-Cramayel (FR); GRALL, Terence, 77550 Moissy-Cramayel (FR); PIETTE, Romaric, Jean-Marie, 77550 Moissy-Cramayel (FR)
(74) Mandataire: Ernest Gutmann - Yves Plasseraud S.A.S.
(86) Numéro de dépôt international: PCT/FR2020/050967
(87) Numéro de publication internationale: WO 2020/245552

(56) Documents cités:
- CN-A- 108 857 909
- CN-A- 109 202 545
- DE-A1- 102012 017 906

## Description

L'invention concerne le nettoyage et le traitement des surfaces externes d'une pièce avec un média (que l'on pourrait aussi dénommer « medium » pour la marque du singulier) de sablage, la pièce pouvant utilement être une pièce telle qu'une pièce aéronautique. Un procédé de nettoyage et/ou de traitement de surface est donc concerné, qui propose de projeter un tel média de sablage sous pression sur la surface à traiter. La présente invention est particulièrement adaptée pour nettoyer et traiter des pièces obtenues par un procédé de fabrication additive.

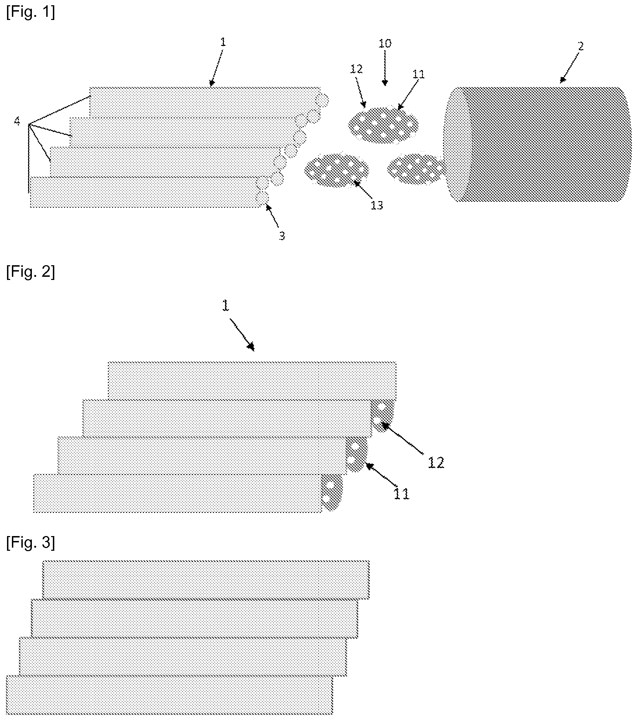

Les pièces obtenues par un procédé de fabrication additive présentent une forte rugosité avec une rugosité arithmétique du profil (Ra) allant de 5µm à 50µm. Un premier facteur qui contribue à cette rugosité est associé à l'empilement par couches successives propre à la technique du procédé de fabrication additive qui crée un effet de marche comme la pièce illustrée sur la figure 1. La présence de cette rugosité peut générer des problèmes fonctionnels et mécaniques dans un assemblage mécanique. Un autre facteur qui participe à la rugosité est la présence des grains de poudre qui sont agglomérés à la surface de la pièce. Ces grains de poudre agglomérés en surface peuvent être libérés pendant le fonctionnement de la pièce et peuvent endommager le système mécanique associé à cette pièce, tel que par exemple un circuit d'huile. Ces grains peuvent également être libérés lors de la manipulation par un opérateur et peuvent présenter un risque sanitaire et environnemental. Enfin, pour les pièces obtenues par fabrication additive, il est nécessaire d'enlever la poudre résiduelle qui n'aurait pas été fusionnée lors de la fabrication. Cette étape est réalisée avec une brosse et un aspirateur mais qui s'avère être insuffisante. En outre, dans certains cas, lorsque cette étape a été omise et lorsque la pièce a été soumise à un traitement thermique, il est alors impossible d'enlever la poudre qui s'est frittée à la pièce sous l'effet thermique.

Pour pouvoir exploiter pleinement les performances d'une pièce obtenue par fabrication additive, il est donc impératif de supprimer la rugosité surfacique et d'enlever les grains de poudre résiduels présents à la surface. Pour cela, il est connu d'utiliser une technique de sablage à base de particules de corindon pour réduire la rugosité. Cette technique consiste à projeter des particules de corindon sous pressions sur la surface à traiter de la pièce. Cette technique permet de réduire la rugosité mais présente un risque important de contamination pour la pièce. En effet, les particules de corindons peuvent être incrustées en surface de la pièce lors de l'impact des particules de corindon avec la surface de la pièce. Ce taux d'incrustation est de l'ordre de 5% du volume de particules de corindon projetées. La présence de ces particules de corindon à la surface de la pièce présente les mêmes effets néfastes que les grains de poudre, et peuvent avoir un impact sur les propriétés mécaniques de la pièce.

Une autre solution consiste à projeter de particules de glace carbonique sous pression sur la surface d'une pièce pour enlever les grains de poudre présents à la surface de la pièce avant le traitement thermique. Le terme « glace carbonique » désigne le dioxyde de carbone CO2 lorsqu'il se présente sous forme solide. Elle possède la propriété de se vaporiser directement sans fondre, en passant de l'état solide à l'état gazeux, sans passer par l'état liquide. Cette technique s'apparente à un sablage et permet de réduire la rugosité ou supprimer les grains de poudre grâce à la dureté des particules de glace carbonique. L'avantage de la glace carbonique vis-à-vis des techniques de sablage usuelles, est qu'elle se sublime après l'impact sous l'effet de l'énergie thermique produite par l'impact. Les particules de glace carbonique se transforment en gaz et s'évaporent dans l'atmosphère immédiatement. Par conséquent, à la différence du sablage classique où les particules de corindon projetées peuvent être incrustées à la surface de la pièce, les particules de glace carbonique ne présentent pas de risque de contamination et laissent la pièce propre. La dureté de la glace carbonique permet de décrocher les grains de poudre en surface de la pièce et d'enlever la poudrer résiduelle sans laisser de résidu à la surface de la pièce traitée.

Cependant un sablage basé sur l'utilisation des particules de glace carbonique n'est pas assez efficace pour enlever la poudre résiduelle lorsque la pièce à traiter a déjà subi un traitement thermique. En effet la poudre résiduelle s'est agglomérée à la surface de la pièce sous l'effet thermique par un phénomène de frittage. Il n'est alors plus possible de l'enlever avec un sablage à base uniquement de glace carbonique.

L'invention a donc pour objet un nouveau média de sablage qui permet à la fois de supprimer la rugosité et d'enlever les grains de poudre et la poudre résiduelle présents à la surface d'une pièce obtenue par fabrication additive ou toute autre technique. En particulier, le nouveau média de sablage proposé est efficace pour enlever la poudre résiduelle même lorsque la pièce a subi au préalable un traitement thermique. Le nouveau média de sablage présente donc une efficacité de nettoyage accrue tout en préservant l'intégrité de la pièce contrairement aux médias de sablage de l'art antérieur.

Certes, dans DE 10 2012 017906 il est proposé un procédé pour nettoyer et traiter des surfaces externes d'une pièce avec un medium de sablage comprenant des premières particules de glace et des secondes particules ayant une dureté comprise entre 2000HV et 2500HV, lesdites secondes particules étant incrustées à la surface et dans le volume desdites premières particules, ledit procédé comprenant une étape dans laquelle un flux de médium de sablage est généré et projeté en direction d'une zone de la surface à traiter de la pièce.

Mais demeure le problème de : comment empêcher les secondes particules de s'incruster dans la surface à traiter de la pièce.

Une solution, proposée par l'invention, est de prévoir que la vitesse de projection des particules soit ajustée de manière à éviter la séparation entre les secondes particules et les premières particules lors de l'impact des premières particules contre la surface de la pièce.

Ceci diffère de ce qui a été jusqu'à présent proposé où l'on utilisait de la glace sèche, exclusivement.

Dans l'invention, grâce à la présence des premières particules de glace qui forment une barrière de protection, les secondes particules abrasives ne peuvent plus être directement incrustées à la surface de la pièce. Les particules abrasives sont ensuite libérés suite la sublimation de la glace carbonique ou la fonte de la glace ordinaire en laissant la pièce propre.

Ainsi, contrairement au média de sablage classique où les particules abrasives peuvent polluer la surface de la pièce en s'incrustant à la surface de la pièce après le sablage, le nouveau média laisse une surface propre, dépourvue de tout élément solide propre au média de sablage, permettant d'obtenir une surface nettoyée et traitée sans résidu. L'invention peut être avantageusement complétée par les caractéristiques suivantes, prises individuellement ou en l'une quelconque de leurs combinaisons techniquement possibles :
- les premières particules sont des particules de glace d'eau ayant une température comprise entre -10°C et -20°C,
- les premières particules sont des particules de glace carbonique ayant une température comprise entre - 60°C et -80°C,
- la proportion des secondes particules est comprise entre 20% à 40% en volume par rapport aux premières particules de glace, de préférence comprise entre 20% à 30%,
- les secondes particules sont des particules de corindon,
- les premières particules ont un diamètre compris entre 1mm et 50mm, de préférence entre 20mm et 30mm,
- les secondes particules ont un diamètre compris entre 0,01mm et 0,5mm, de préférence entre 0,1mm et 0,2mm.

Selon un mode de réalisation de l'invention, la vitesse de projection est comprise entre 10m/s et 290m/s, de préférence entre 100m/s et 150 m/s.

Un autre aspect de l'invention concerne un procédé de fabrication d'un média de sablage tel que défini ci-dessus, comprenant les étapes suivantes :
- fournir du dioxyde de carbone liquide ;
- soumettre le dioxyde de carbone liquide à une détente à la pression atmosphérique pour former de la neige de glace carbonique ;
- saupoudrer des secondes particules sur la neige de glace carbonique ;
- mélanger l'ensemble pour obtenir un premier mélange ;
- comprimer le premier mélange pour former un solide de glace carbonique avec les particules de corindon incrustées à la surface et dans le volume dudit solide ;
- extruder ledit solide à travers une plaque de façon à obtenir un cylindre ;
- découper ledit cylindre pour obtenir des premières particules de glace carbonique avec des dimensions désirées.

L'invention peut être avantageusement complétée par les caractéristiques suivantes, prises individuellement ou en l'une quelconque de leurs combinaisons techniquement possibles :
- la quantité des secondes particules introduites dans la neige de glace carbonique est comprise entre 20% à 40% en volume par rapport aux premières particules de glace, de préférence comprise entre 20% à 30%,
- les secondes particules sont des particules de corindon.

### Brève description des dessins

D'autres caractéristiques, détails et avantages de l'invention apparaîtront à la lecture de la description détaillée ci-après, et à l'analyse des dessins annexés, sur lesquels :
[Fig. 1] montre schématiquement un média de sablage selon un mode de réalisation de l'invention utilisé dans un procédé de traitement de surface d'une pièce obtenue par fabrication additive ;
[Fig. 2] montre l'état de la surface traitée de la pièce avec incrustation des premières particules de glace carbonique suite au traitement;
[Fig. 3] montre l'état de la surface traitée de la pièce une fois les premières particules de glace carboniques fondues.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La figure 1 illustre schématiquement un nouveau média de sablage 10 selon un mode de réalisation de l'invention. Le média est projeté dans un flux d'air comprimé par un dispositif approprié 2 tel qu'un pistolet en direction d'une surface à traiter d'une pièce rugueuse 1 obtenue par exemple par fabrication additive.

La pièce rugueuse 1 est constituée d'une succession de couches 4 formant des marches. En outre des poudres 3 sont agglomérées à la surface des marches.

Le média 10 comprend une pluralité de premières particules de glace 11 et des secondes particules abrasives 12 qui sont incrustées à la surface des premières particules et dans le volume de ces dernières.

Selon un mode de réalisation de l'invention, les premières particules de glace sont des particules de glace carbonique obtenues à partir du liquide CO2. Les particules de glace carbonique se subliment au contact de la surface de la pièce et s'évapore sous forme de gaz en ne laissant aucun résidu.

Selon une forme de réalisation de l'invention, les particules de glace carbonique se présentent sous la forme de bâtonnets, dits pellets, ayant une longueur comprise entre 1mm à 60mm et d'un diamètre compris entre 1mm et 50mm, de préférence entre 20mm et 30mm. Elles peuvent également se présenter sous une forme ellipsoïdale comme dans l'exemple illustré sur la figure 1.

Avantageusement, les premières particules de glace carbonique présentent une température comprise entre -60°C et -80°C.

Selon une variante, les premières particules de glace peuvent être également des particules de glace d'eau obtenues à partir de l'eau congelée. Les particules de glace sont projetées sur la surface de la pièce à traiter et fondent sous l'effet thermique au moment du contact avec la surface et le liquide résultant s'évapore en ne laissant aucun résidu. Les premières particules sont des particules de glace d'eau qui présentent une température comprise entre -10°C et -20°C

Il est connu de projeter des particules de glace carbonique sur une surface à traiter d'une pièce pour effectuer un nettoyage cryogénique. L'efficacité de traitement de surface et de nettoyage est basé sur la combinaison de trois effets :
- effet mécanique dû à l'énergie cinétique des particules de glace carbonique au moment de l'impact sur la pièce ;
- effet thermique dû à la température des particules, les résidus se fragilisent et se rétractent ;
- effet souffle créé par la sublimation de la glace carbonique qui fait décoller le résidu. Toutefois un traitement à base uniquement de ces particules de glace carbonique n'est pas efficace pour réduire la rugosité et/ou supprimer les poudres qui sont agglomérées sur la surface d'une pièce ayant été soumis au préalable à un traitement thermique. Les auteurs de la présente invention ont trouvé un moyen de résoudre ce problème, grâce à un nouveau média de sablage qui combine les particules de glace carbonique avec des particules abrasives ayant une dureté comprise entre 2000HV et 2500HV qui sont incrustées à la surface et dans le volume des particules de glace carbonique.

Ce nouveau média permet de combiner les effets des particules de glace carbonique cités ci-dessus et le pouvoir abrasif des secondes particules, pour réduire la rugosité et de supprimer les poudres agglomérées.

En outre, grâce à la présence des particules de glace carbonique qui forment une barrière de protection, les particules abrasives ne peuvent plus être directement incrustées à la surface de la pièce. Elles sont portées par les particules de glace carbonique qui sont incrustées à la surface de la pièce traitée suite au sablage comme l'illustre la figure 2. Les particules abrasives sont ensuite libérés suite la sublimation de la glace carbonique ou la fonte de la glace ordinaire en laissant la pièce propre.

Ainsi, contrairement au média de sablage classique où les particules abrasives peuvent polluer la surface de la pièce en s'incrustant à la surface de la pièce après le sablage, le nouveau média laisse une surface propre comme l'illustre la figure 3, dépourvue de tout élément solide propre au média de sablage, permettant d'obtenir une surface nettoyée et traitée sans résidu.

Selon l'invention, les secondes particules abrasives présentent de préférence une dureté comprise entre 2000HV et 2500HV.

Elles ont un diamètre compris entre 0,01mm et 0,5mm, de préférence entre 0,1mm et 0,2mm.

De préférence, les secondes particules comprennent des particules de corindon. Avantageusement, la proportion des secondes particules des secondes particules est comprise entre 20% à 40% en volume par rapport aux premières particules de glace, de préférence comprise entre 20% à 30%.

Le procédé de fabrication du nouveau média comprenant des premières particules de glace carbonique et des secondes particules abrasives incrustées à la surface et dans le volume des premières particules va maintenant être décrit.

Une première étape du procédé consiste à obtenir de la neige CO2 par détente à partir du dioxyde de carbone liquide contenu dans une enceinte. Le CO2 liquide sous pression est introduit dans une enceinte. La pression qui règne à l'intérieur de l'enceinte est égale ou au voisinage de la pression atmosphérique. Le flux de CO2 liquide sous pression subit une détente à l'intérieur de l'enceinte qui s'accompagne d'une chute de température pour former une neige de CO2 solide.

Dans une seconde étape, les particules de corindon ou autres particules abrasives ayant une dureté comprise 2000HV et 2500HV sont saupoudrées sur la neige de la glace carbonique et mélangées avec la neige de CO2 pour obtenir un premier mélange.

Dans une troisième étape, ce premier mélange est ensuite introduit dans des moyens de compactage et d'extrusion pour former un mélange solide compacté de CO2 avec des particules corindon incrustées dans le solide CO2.

Dans une quatrième étape, le solide compacté est ensuite pressé à travers une plaque extrudée pour former des cylindres qui sont subdivisés en bâtonnets ou pellets de glace carbonique avec les particules de corindon incrustées à la surface et dans le volume des pellets de glace carbonique.

Un exemple de procédé de traitement de surface d'une pièce utilisant un média de sablage de la présente invention va maintenant être décrit, dans une hypothèse où les premières particules sont des particules de glace carbonique.

Il comprend (quel que soit le type de premières particules) une étape dans laquelle un flux de média de sablage est généré et projeté en direction d'une zone de la surface à traiter de la pièce. Sous l'effet de l'air comprimé, les premières particules ou les pellets de glace carbonique sont accélérés de manière à atteindre une vitesse prédéterminée. Cette vitesse est ajustée de manière à éviter la séparation entre les secondes particules et les premières particules durant la phase de projection et lors de l'impact des premières particules contre la surface de la pièce. La vitesse de projection est comprise entre 10m/s et 290m/s, de préférence entre 100m/s et 150 m/s. Des essais sont réalisés afin de déterminer la vitesse optimale.

Avant de débuter l'opération de traitement et de nettoyage de la surface d'une pièce, des paramètres doivent être prédéfinis : les dimensions des premières particules de glace carbonique et des secondes particules, la vitesse de projection en sortie de la buse du dispositif de projection, la pression de projection, le débit de projection.

Le débit de projection est compris entre 10kg/h et 100kg/h.

Si donc les premières particules sont des particules de glace carbonique, grâce à cette vitesse élevée et à une très basse température comprise entre -60°C et -80°C, les impuretés gèlent et les fissures apparaissent. Les pellets s'introduisent dans cette fissure, éclatent et décollent ainsi les dépôts. Cet effet de nettoyage cryogénique est combiné avec l'action abrasive exercée par les particules abrasives incrustées dans les pellets de glace carbonique pour supprimer les poudres frittées à la surface de la pièce traitée thermiquement.

L'action conjointe des pellets de glace carbonique et des particules abrasives permet de supprimer les poudres agglomérées et frittées à la surface de la pièce qui a été soumis à un traitement thermique tout en laissant propre la pièce après l'opération.

### Application industrielle

L'invention peut trouver à s'appliquer notamment au domaine de nettoyage et de traitement des pièces, notamment des pièces obtenues par fabrication additive pour supprimer la rugosité et les résidus de poudre propres à la fabrication additive.

## Revendications

1. Procédé pour nettoyer et traiter des surfaces externes d'une pièce (1) avec un medium de sablage (10) comprenant des premières particules de glace (11) et des secondes particules (12) ayant une dureté comprise entre 2000 et 2500HV, lesdites secondes particules étant incrustées à la surface et dans le volume desdites premières particules, ledit procédé comprenant une étape dans laquelle un flux de médium de sablage est généré et projeté en direction d'une zone de la surface à traiter de la pièce, **caractérisé en ce que** la vitesse de projection des particules est ajustée de manière à éviter la séparation entre les secondes particules et les premières particules lors de l'impact des premières particules contre la surface de la pièce.

2. Procédé selon la revendication 1, dans lequel les premières particules sont des particules de glace d'eau ayant une température comprise entre -10°C et -20°C.

3. Procédé selon la revendication 1, dans lequel les premières particules sont des particules de glace carbonique ayant une température comprise entre - 60°C et -80°C.

4. Procédé selon l'une des revendications 1 à 3, dans lequel la proportion des secondes particules est comprise entre 20 à 40% en volume par rapport aux premières particules de glace, de préférence comprise entre 20 à 30%.

5. Procédé selon l'une des revendications 1 à 4, dans lequel les secondes particules sont des particules de corindon.

6. Procédé selon l'une des revendications 1 à 5, dans lequel les premières particules ont un diamètre compris entre 1mm et 50mm, de préférence entre 20mm et 30mm.

7. Procédé selon l'une des revendications 1 à 6, dans lequel les secondes particules ont un diamètre compris entre 0,01mm et 0,5mm, de préférence entre 0,1mm et 0,2mm.

8. Procédé selon l'une des revendications 1 à 7, dans lequel ladite vitesse de projection est comprise entre 10m/s et 290m/s.

9. Procédé selon l'une des revendications 1 à 7, dans lequel ladite vitesse de projection est comprise entre 100m/s et 150 m/s.

10. Procédé de fabrication du médium de sablage utilisé dans le procédé selon l'une des revendications 1 à 9, comprenant les étapes suivantes :
- fournir du dioxyde de carbone liquide ;
- soumettre le dioxyde de carbone liquide à une détente à la pression atmosphérique pour former de la neige de glace carbonique ;
- saupoudrer des secondes particules sur la neige de glace carbonique, avec une quantité de secondes particules introduites dans la neige de glace carbonique comprise entre 20 à 40% en volume par rapport aux premières particules de glace, de préférence comprise entre 20 à 30% ;
- mélanger l'ensemble pour obtenir un premier mélange ;
- comprimer le premier mélange pour former un solide de glace carbonique avec les particules de corindon incrustées à la surface et dans le volume dudit solide ;
- extruder ledit solide à travers une plaque de façon à obtenir un cylindre ;
- découper ledit cylindre pour obtenir des premières particules de glace carbonique avec des dimensions désirées.

11. Procédé de fabrication selon la revendication 10, dans lequel les secondes particules sont des particules de corindon.

## Patentansprüche

1. Verfahren zum Reinigen und Behandeln von Außenflächen eines Werkstücks (1) mit einem Strahlmedium (10), das erste Partikel aus Eis (11) und zweite Partikel (12) mit einer Härte zwischen 2000 und 2500 HV umfasst, wobei die zweiten Partikel auf der Oberfläche und im Volumen der ersten Partikel eingebettet sind, wobei das Verfahren einen Schritt umfasst, bei dem eine Strömung von Strahlmedium erzeugt und in Richtung eines Bereichs der zu behandelnden Oberfläche des Werkstücks geschleudert wird,
**dadurch gekennzeichnet, dass** die Geschwindigkeit des Schleuderns der Partikel so eingestellt wird, dass eine Trennung zwischen den zweiten Partikeln und den ersten Partikeln beim Auftreffen der ersten Partikel auf die Oberfläche des Werkstücks vermieden wird.

2. Verfahren nach Anspruch 1,
wobei die ersten Partikel Wassereispartikel mit einer Temperatur zwischen -10 °C und -20 °C sind.

3. Verfahren nach Anspruch 1,
wobei die ersten Partikel Trockeneispartikel mit einer Temperatur zwischen -60 °C und -80 °C sind.

4. Verfahren nach einem der Ansprüche 1 bis 3,
wobei der Anteil der zweiten Partikel 20 bis 40 Vol.-%, vorzugsweise 20 bis 30 %, bezogen auf die ersten Partikel aus Eis, beträgt.

5. Verfahren nach einem der Ansprüche 1 bis 4,
wobei es sich bei den zweiten Partikeln um Korundpartikel handelt.

6. Verfahren nach einem der Ansprüche 1 bis 5,
wobei die ersten Partikel einen Durchmesser zwischen 1 mm und 50 mm, vorzugsweise zwischen 20 mm und 30 mm, aufweisen.

7. Verfahren nach einem der Ansprüche 1 bis 6,
wobei die zweiten Partikel einen Durchmesser zwischen 0,01 mm und 0,5 mm, vorzugsweise zwischen 0,1 mm und 0,2 mm, aufweisen.

8. Verfahren nach einem der Ansprüche 1 bis 7,
wobei die Schleudergeschwindigkeit zwischen 10 m/s und 290 m/s liegt.

9. Verfahren nach einem der Ansprüche 1 bis 7,
wobei die Schleudergeschwindigkeit zwischen 100 m/s und 150 m/s liegt.

10. Verfahren zur Herstellung des in dem Verfahren nach einem der Ansprüche 1 bis 9 verwendeten Strahlmediums, umfassend die folgenden Schritte:
- Bereitstellen von flüssigem Kohlendioxid;
- Unterziehen des flüssigen Kohlendioxids einer Entspannung auf Atmosphärendruck, um Trockeneisschnee zu bilden;
- Streuen von zweiten Partikeln auf den Trockeneisschnee, wobei die Menge der in den Trockeneisschnee eingebrachten zweiten Partikel zwischen 20 und 40 Vol.-%, vorzugsweise zwischen 20 und 30 %, bezogen auf die ersten Partikel aus Eis, beträgt;
- Mischen des Ganzen, um eine erste Mischung zu erhalten;
- Pressen der ersten Mischung, um einen Trockeneisfeststoff zu bilden, wobei die Korundpartikel auf der Oberfläche und im Volumen des Feststoffs eingebettet sind;
- Extrudieren des Feststoffs durch eine Platte, um einen Zylinder zu erhalten;
- Zerkleinern des Zylinders, um erste Trockeneispartikel mit gewünschten Abmessungen zu erhalten.

11. Herstellungsverfahren nach Anspruch 10,
wobei es sich bei den zweiten Partikeln um Korundpartikel handelt.

## Claims

1. Method for cleaning and treating external surfaces of a part (1) with a blasting medium (10) comprising first particles of ice (11) and second particles (12) having a hardness between 2000 and 2500HV, said second particles being embedded in the surface and in the volume of said first particles, said method comprising a step in which a flow of blasting medium is generated and projected towards an area of the surface of the part to be treated,
**characterized in that** the projection speed of the particles is adjusted to avoid separation between the second particles and the first particles on impact of the first particles against the surface of the part.

2. Method according to claim 1, wherein the first particles are water ice particles having a temperature between -10°C and -20°C.

3. Method according to claim 1, wherein the first particles are dry ice particles having a temperature between 60°C and -80°C.

4. Method according to any one of claims 1 to 3, wherein the proportion of the second particles is between 20 and 40% by volume with respect to the first particles of ice, preferably between 20 and 30%.

5. Method according to any one of claims 1 to 4, wherein the second particles are corundum particles.

6. Method according to any one of claims 1 to 5, wherein the first particles have a diameter between 1mm and 50mm, preferably between 20mm and 30mm.

7. Method according to any one of claims 1 to 6, wherein the first particles have a diameter between 0.01mm and 0.5mm, preferably between 0.1 and 0.2mm.

8. Method according to any one of claims 1 to 7, wherein said projection speed is between 10m/s and 290m/s.

9. Method according to any one of claims 1 to 7, wherein said projection speed is between 100m/s and 150 m/s.

10. Method for manufacturing the blasting medium used in the method according to any one of claims 1 to 9, comprising the steps of:
- supplying liquid carbon dioxide;
- subjecting the liquid carbon dioxide to expansion to atmospheric pressure to form dry ice snow;
- sprinkling second particles on the dry ice snow, with a quantity of second particles introduced into the dry ice snow between 20 and 40% by volume with respect to the first particles of ice;
- mixing the whole to obtain a first mixture;
- compressing the first mixture to form a dry ice solid with the second particles embedded in the surface and in the volume of said solid;
- extruding said solid through a plate so as to obtain a cylinder; and
- cutting said cylinder to obtain first dry ice particles with desired dimensions.

11. Method according to claim 10, wherein the second particles are corundum particles.
